Europäisches Patentamt

European Patent Office

Office européen des brevets

(19)

(11) Publication number: **0 101 237**
**A2**

(12) **EUROPEAN PATENT APPLICATION**

(21) Application number: **83304435.7**

(22) Date of filing: **01.08.83**

(51) Int. Cl.³: **A 47 J 43/046**

(30) Priority: **17.08.82 US 408755**

(43) Date of publication of application:
**22.02.84 Bulletin 84/8**

(84) Designated Contracting States:      –
**DE FR GB IT NL**

(71) Applicant: **SEARS, ROEBUCK AND CO.**
**Sears Tower**
**Chicago Illinois 60684(US)**

(72) Inventor: **Levin, Monte L.**
**420 East 54th Street**
**New York New York 10022(US)**

(72) Inventor: **Fine, Leonard D.**
**75 Henry Street**
**Brooklyn New York 11201(US)**

(74) Representative: **Jennings, Guy Kenneth et al,**
**GILL JENNINGS & EVERY 53-64 Chancery Lane**
**London WC2A 1HN(GB)**

(54) **Food processor.**

(57) A large feed tube 52 extending from the cover 30 of the container 18 of a food processor may be partly obstructed by a safety guard 64 on a wing element 58, which is pivotable between an open position in which the feed tube is unobstructed and the processor cannot operate and a closed position in which a safety switch 70 is actuated via a tongue 68 to allow operation. Thus, even though large vegetables can be inserted in the open position and then processed, it is not possible to insert a human hand in the feed tube when the processor is operating.

Fig.1

EP 0 101 237 A2

GJE/10/2135/02

Sears Roebuck & Co.

- 1 -

## Food processor

This invention relates to food processors and is particularly concerned with safety means for barring the entry of an object, such as a human hand, while the processor is running.

An example of a prior art electric food processor is disclosed in U S design patent no: 256,318.  These units generally comprise a container base supporting a spindle carrying a food-processing tool and driven by a motor controlled by a safety switch and an open-topped container surrounding the spindle and fitted with a cover having a vertical feed tube through which food may be introduced into the container.  The motor will run only when the safety switch is closed by the fitting of the cover in position.  In the past, the feed tube through which vegetables and the like are introduced into the container, has been long enough and of such a dimension that the human hand cannot inadvertently fit into the tube and be injured by the blade working in the container.

Further examples of food processors employing feed tubes and safety switches are found in U.S. patents nos: 3,892,365; 3,985,304, 4,111,372; 4,113,188 and 4,269,917.

- 2 -

One of the draw backs of such prior food processors has been that because of safety limitations, the cross sectional dimensions of the feed tube of the food processor has been inconveniently small. This has meant that a large vegetable or piece of meat has had to be cut in several pieces before it could be introduced into the feed tube. In the past this arrangement has reluctantly been settled for because of the strong public drive for safety in consumer appliances.

According to the present invention, a food processor of the kind just referred to is characterised by a wing member mounted on the cover and including a guard and an actuating tongue, the wing member being movable with respect to the cover between an open position and a closed position in which the guard is disposed across the feed tube to reduce the dimensions of the largest object receivable into the opening at the top of the tube and the actuating tongue engages and closes the safety switch. With such a construction it is possible to introduce large vegetables such as apples, and large hunks of meat, while at the same time adhering scrupulously to safety requirements demanded by the market place.

An example of food processor in accordance with the invention will now be described with reference to the accompanying drawings, in which:-

Figure 1 is a perspective view of the food processor with a guard open;

Figure 2 is a top plan view of the food processor with the guard closed;

Figure 3 is a side elevational view of the food processor with the guard closed;

Figure 4 is a fragmentary top view of the top of the container with the guard open;

Figure 5 is a fragmentary sectional view through a container forming part of the food processor showing a tongue of a wing element engaging a safety switch; and

Figure 6 is an enlarged fragmentary sectional view taken on the line 6 - 6 of Figure 5.

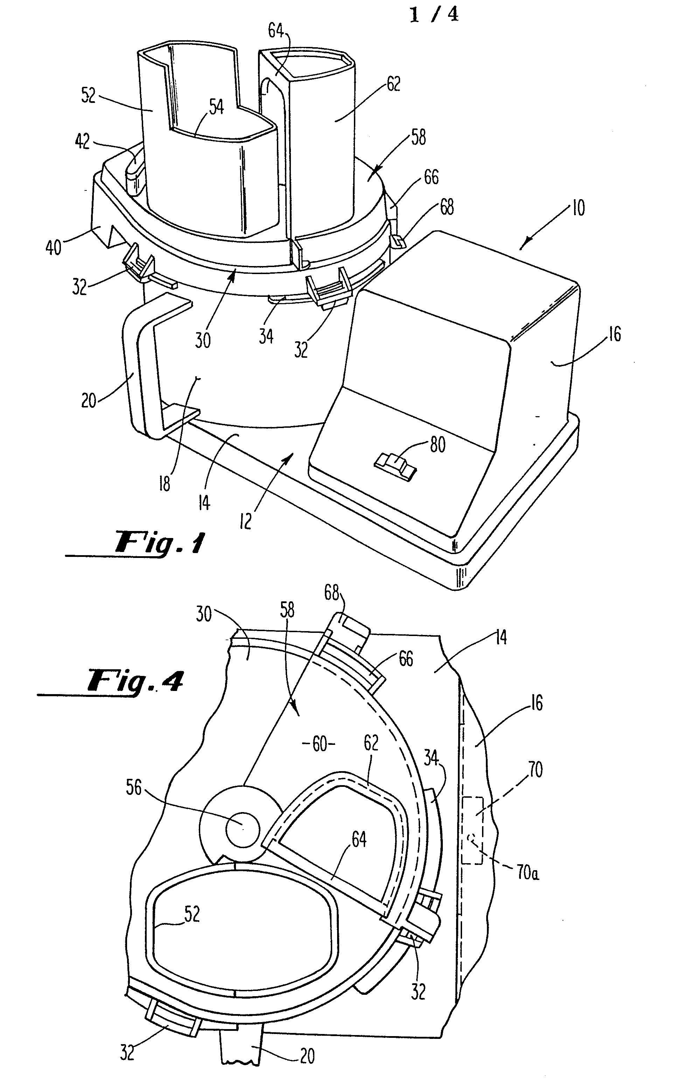

The food processor 10 shown in Figure 1 generally comprises a housing 12 presenting a container base 14 and containing a motor within the motor shell 16. Bayonet-mounted in the usual fashion on the container base as a result of clockwise rotation is the container 18 having a handle 20.

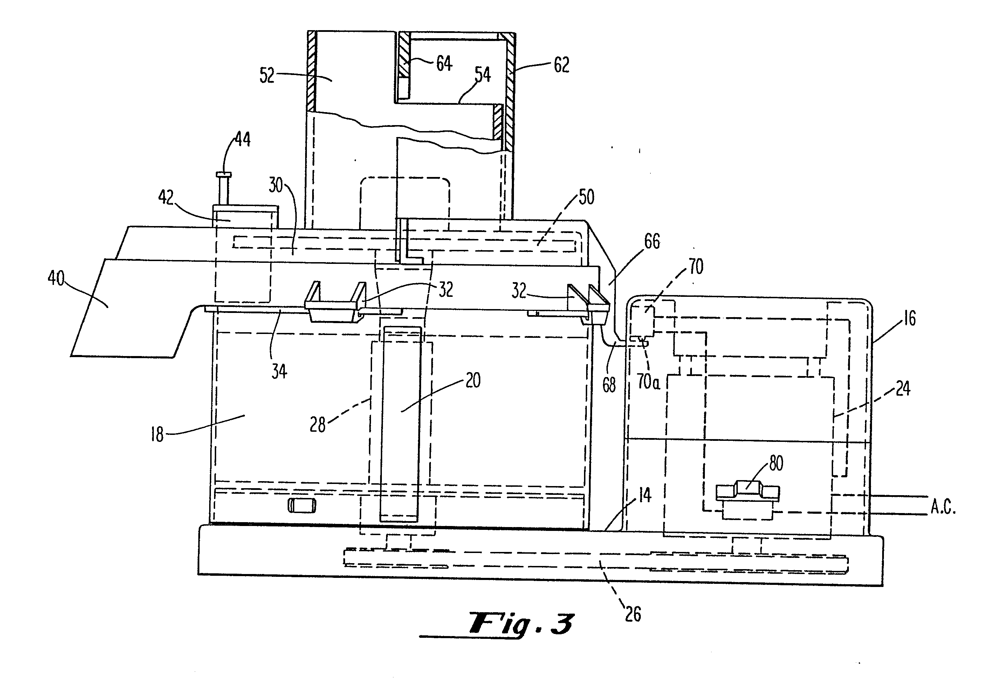

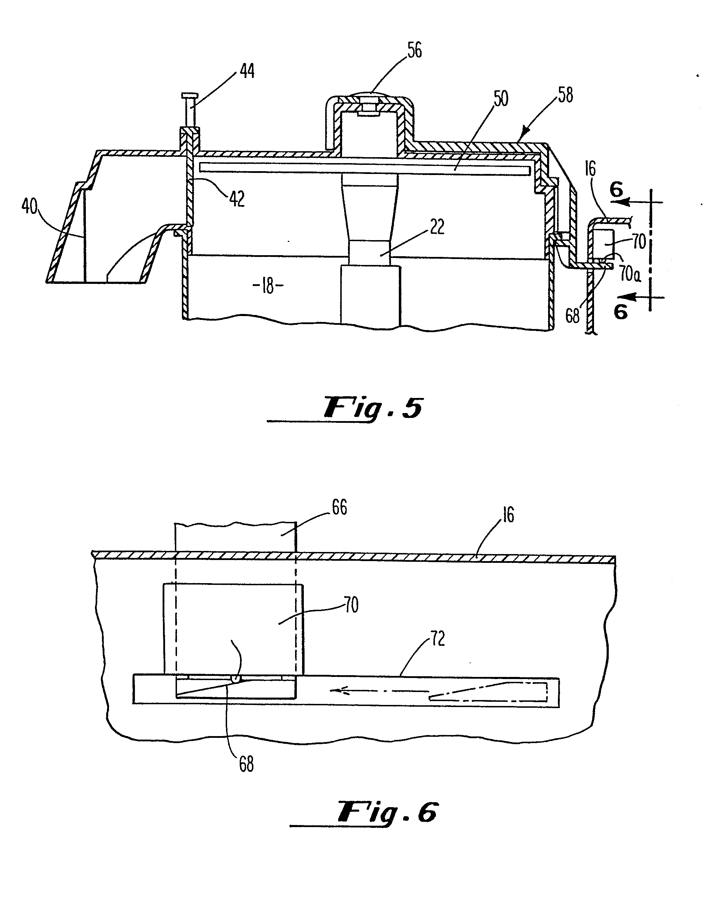

Extending upwardly from a central position of the container base is the spindle 22 (Figure 5) which is driven by the motor 24 in shell 16 by means of a belt 26 engaging suitable pulleys. It will be noted that the container 18 is formed with a central annular wall 28 (Figure 3) surrounding the spindle 22. The container cover 30 is formed with appropriate locking flanges 32 which engage ribs 34 on the container to constitute a bayonet fitting which is locked by clockwise rotation. The container cover 30 may be formed with a delivery spout 40 extending radially outward and a gate 42 closing off the spout and operable by means of a manipulator 44 (Figure 5).

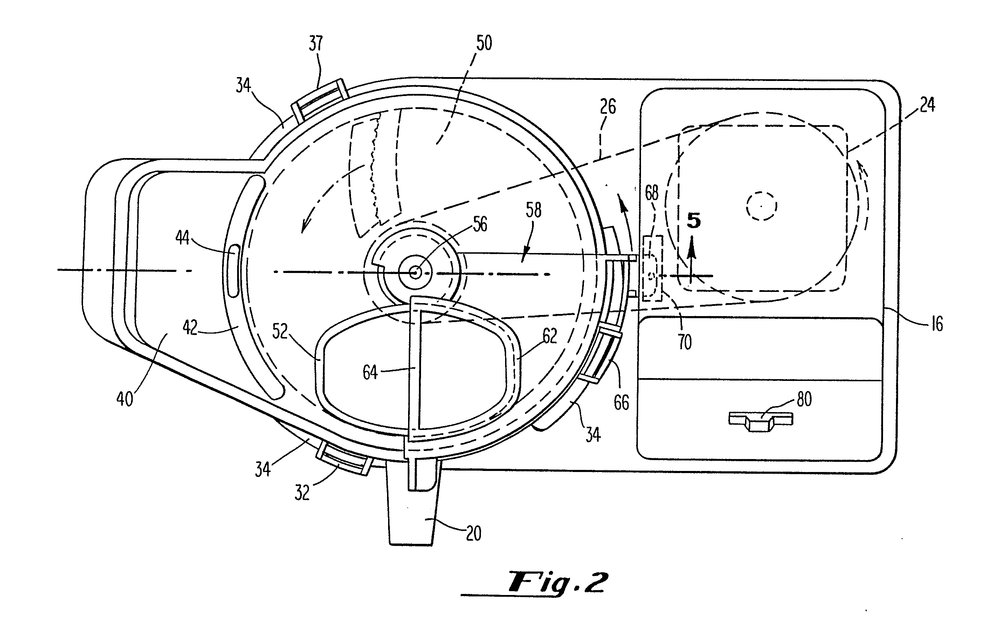

Conventionally mountable and demountable on the spindle 22 is the shredder disc 50 (Figure 5). As shown in Figure 3, the container cover is fashioned with a feed tube 52. This is sufficiently large to receive large chunks of meat and vegetables, for instance, whole potatoes or a bunch of carrots. As shown in Figure 1, the feed tube is notched as at 54 over substantially half its dimension. Pivoted on a vertical axis at the centre of the container cover by means of a pivoting pin 56 is a wing element 58. The wing element is formed with a horizontal wall 60 and an upward feed tube segment 62 complementing the feed tube 52 and adapted to nest over a portion of the feed tube when the segment 62 is in closed position. The feed tube segment 62 includes a horizontal bar 64 or guard which is disposed transverse of the feed tube opening when the wing element 58 is in the closed position (Figure 2).

The wing element also comprises a locking flange 66 which is adapted to engage the rib 34. Extending down from the locking flange 66 is a safety switch actuator tongue 68.

Referring to Figure 3, the motor shell 16 mounts within it a safety switch 70, the actuator button 70a of which is accessible to the tongue 68 through a horizontal slot 72 (Figure 6) in the wall of the motor shell most nearly adjacent the container 18. As shown in Figure 6, the tongue is formed with an incline to actuate the button 70a.

In operation, with the container locked onto the container base 14 and the shredder disc or other tool 50 mounted on the spindle 22, the operator places the cover 30 on the container and turns it so that the locking flanges 32 engage the ribs 34 respectively. With the feed tube segment 62 open as shown in Figure 1, the operator places the large object to be processed in the tube 52. With the wing element 58 including the tongue 68 and the feed tube segment 62 in the position shown in Figure 1, the motor 24 will not operate. At this point, the operator pivots the wing element 58 clockwise as viewed in Figure 4 so that the segment 62 covers a portion of the feed tube and the guard 64 comes to rest, bisecting the entry of the feed tube as shown in Figures 2 and 3. At this point the tongue 68 has been moved together with the rest of the wing element to enter the slot 72 and actuate the button 70a of switch 70. The main control switch 80 of the unit (Figure 3) may now be effectively activated. In this position of the wing element, the locking flange 66 engages the rib 34 adjacent the switch 70.

With the main switch moved to the ON position, the motor 24 drives the disc 50 to process the large vegetable or other object disposed in the feed tube. A pusher may be used to advance the processing as is conventional. It will be understood that even with the wing element closed, as shown in Figure 2, smaller pieces of vegetable may be inserted directly through the openings on either side of the guard 64 with the shredder operating in the usual way.

Thus, it will be seen that with the wing element in the closed position, the guard 64 does not preclude operation on smaller pieces of vegetables, meats, etc., but at the same time prevents the extension of a human hand into the feed tube. With the feed tube segment 62 pivoted open with the rest of the wing element 58, however, an extremely large object may be inserted in the feed tube 52 which can then be processed after the wing element is swung into the closed position with the guard 64 in place at the top of the feed tube and the tongue 68 actuating the safety switch 70.

C L A I M S

1.      A food processor comprising a container base (14) supporting a spindle (22) carrying a food-processing tool (50) and driven by a motor (24) controlled by a safety switch (70) and an open-topped container (18) surrounding the spindle and fitted with a cover (30) having a vertical feed tube (52) through which food may be introduced into the container, characterised by a wing member (58) mounted on the cover and including a guard (64) and an actuating tongue (68), the wing member being movable with respect to the cover between an open position and a closed position in which the guard is disposed across the feed tube to reduce the dimensions of the largest object receivable into the opening at the top of the tube and the actuating tongue engages and closes the safety switch.

2.      A food processor as claimed in claim 1 wherein the cover may be locked on the container and the wing member may be moved into the closed position only when the container is in the locked position.

3.      A food processor as claimed in claim 1 or claim 2 wherein the wing member is pivoted about a vertical axis (56).

4.      A food processor as claimed in claim 3 wherein the wing member is pivoted at the centre of the cover.

5.        A food processor as claimed in claim 4 wherein the container is locked on the container base by a bayonet fitting and the cover is locked on the container also by a bayonet fitting, both fittings turning to lock in the same sense of rotation as the wing member pivots to the closed position.

6.        A food processor as claimed in claim 1 wherein in the open position of the wing member, the guard is out of the way of the top of the tube and the tongue does not engage the safety switch.

Fig.1

Fig.4

**Fig.2**

*Fig. 3*

_Fig. 5_

_Fig. 6_